# EUROPÄISCHE PATENTANMELDUNG

(11) **EP 1 004 864 A1**
(43) Veröffentlichungstag der Anmeldung: **31.05.2000**
(21) Anmeldenummer: 99123186.1
(22) Anmeldetag: 24.11.1999
(51) Int. Cl.: G01K 7/18

(54) **Nutenwiderstandsthermometer**

(30) Priorität: 27.11.1998 DE 19854984
(71) Anmelder: ABB PATENT GmbH, 68309 Mannheim (DE)
(72) Erfinder: Zinkhan, Sascha, 63584 Gründau (DE)
(74) Vertreter: Schmidt, Michael, Dipl.-Phys.

(57) **Zusammenfassung**

Die Erfindung betrifft ein Nutenwiderstandsthermometer mit einem temperaturempfindlichen elektrischen Widerstand mit mindestens zwei elektrischen Zuleitungen, gemäß Oberbegriff des Patentanspruches 1.
Um ein Thermometer dieser Art im Hinblick auf einfache Montage und auf flachbauende Bauweise zu optimieren, ist erfindungsgemäß vorgeschlagen, daß der Trägerkörper (1) einstückig ausgebildet und mit einer zumindest teilumfangsmäßig umlaufenden Nut (10) versehen ist, in welche sowohl der Meßwiderstand (2) als auch die Anschlußleitungen (5) und die Anschlußdrähte (3) teilformschlüssig einlegbar sind.

## Beschreibung

Die Erfindung betrifft ein Nutenwiderstandsthermometer mit einem temperaturempfindlichen elektrischen Widerstand mit mindestens zwei elektrischen Zuleitungen, gemäß Oberbegriff des Patentanspruches 1.

Nutenwiderstandsthermometer dieser Art werden kleinbauend und flach hergestellt um gemäß ihrer Bezeichnung zur Temperaturmessung an schwer zugänglichen Stellen von Maschinen geeignet zu sein.

Diese Thermometer werden dabei in Nuten eingeschoben um so an thermisch empfindlichen Maschinenteilen die Temperatur messen zu können. Da die Thermometer in metallische Partien von Maschinen eingeschoben werden, bedarf es einer ausreichenden Isolation der Zuleitungen, die bis an den Meßwiderstand herangeführt werden. Die Durchschlagfestigkeit muß dabei mindestens 3 kV betragen. Darüber hinaus sind die Anforderungen an die Isolation und an die einzelnen Komponenten so, daß es zu keiner meßtechnischen Beeinflussung auch bei entsprechend großen Feldstärken kommt.

Diese Anforderungen sind gemeinsam mit der Maßgabe der kleinbauenden kompakten Bauweise zu erfüllen.

Aus dem Stand der Technik ist hierzu ein Nutenwiderstandsthermometer aus der DE 298 00 659 U1 bekannt, welches zwischen zwei halbschaligen Kunststoffelementen angeordnet ist. Die Zuleitungen sowie der Meßwiderstand werden in eine der Halbschalen eingelegt und sodann wird das halbschalige Gegenstück aufgesteckt und über Klipselemente verrastet.

Eine solche Bauform ist zwar fertigungstechnisch einfach jedoch zeitaufwendig zu montieren. Diese Bauform ist außerdem nicht optimal flachbauend.

Der Erfindung liegt daher die Aufgabe zugrunde, ein Nutenwiderstandsthermometer im Hinblick auf einfache Montage und auf flachbauende Bauweise zu optimieren.

Die gestellte Aufgabe ist bei einem Nutenwiderstandsthermometer der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen angegeben.

Kern der Erfindung ist, daß die Zuleitungen sowie der Meßwiderstand des Widerstandsthermometer selbst lediglich mit Hilfe eines einstückigen Trägerkörpers positioniert und fixiert werden. Dies geschieht mit Hilfe einer randseitig nahezu vollständig umlaufenden Nut, in welche nicht nur die Zuleitungen sondern auch der Meßwiderstand eingelegt wird. Hierzu weist die Nut an verschiedenen Stellen unterschiedliche Tiefen auf. So sind z.B. die an den Langseiten des Trägerkörpers verlaufenden Nuten lediglich zur Aufnahme der weitestgehend abisolierten Zuleitungen mäßig tief, jedoch so tief daß entsprechend nötige Abstände zur Einhaltung der Durchschlagfestigkeit von außen gegeben sind. An einer der Schmalseiten des Trägerkörpers ist der Nutenverlauf tiefer, weil dort der Meßwiderstand eingelegt ist. Am anderen Ende des Trägerkörpers vertiefen sich jeweils die letzten Abschnitte der seitlichen Nuten derart, daß die eingelegten Anschlußdrähte in einem gewünschten Abstand zueinander aus der dem Meßwiderstand gegenüberliegenden Schmalseite austreten. Nun wird das so vorgefertigte Nutenwiderstandsthermometer mit einem Schrumpfschlauch derart eingefasst, daß seitlich die Anschlußdrähte am herausrutschen aus der Nut gehindert sind und außerdem ist die Einschnürung des Schrumpfschlauches an dem Ende an welchem die Zuleitungen austreten so bemessen, daß in diesem Bereich dieselben derart fest über die Kante der Nuten gedrückt werden, daß eine Zugentlastung ensteht.

Dabei ist natürlich vorteilhaft einen Meßwiderstand mit gegenüberliegenden Anschlußdrähten einzusetzen. Auf diese Weise wird die beiden Anschlußdrähte separat seitlich in den an den beiden Außenrändern angeordneten Nuten voneinander getrennt eingelegt. Die verbleibende Stegbreite zwischen den Nuten gibt den minimalen Isolierabstand zwischen den beiden Anschlußdrähten an.

Zur Gewährleistung einer Dauereinsatztemperatur von 200°C sind die wesentlichen Teile aus Teflon oder Silikon bestehend. Zusätzlich können diese Materialient auch mit Glasfaserverstärkungen verwendet werden.

In weiterer vorteilhafter Ausgestaltung ist zumindest der Meßwiderstand sowie die Trägerkörperspitze mit bzw über einem temperaturbeständigen Verguß miteinander verbunden.

Wie oben bereits ausgeführt kann das Widerstandsthermometer entweder im hinteren Trägerkörperbereich also der heraustretenden Anschlußleitungen oder auch insgesamt mit einem Schrumpfschlauch versehen sein, welcher über die beiden Enden des Trägerkörpers hinausragt, und so einen sicheren Sitz aller Leitungsabschnitte und des Meßwiderstandes ergibt. Vorzugsweise besteht das Schrumpfschlauchmaterial aus Teflon.

Die Erfindung ist in der Zeichnung dargestellt und nachfolgend näher beschrieben.

Es zeigt:
- Fig.1 :: Gesamtaufbau des Nutenwiderstandsthermometers.
- Fig.2 :: Detaildarstellung des Trägerkörpers
- Fig.3 :: Detaildarstellung der Anschlussleitungen und des Meßwiderstandes.

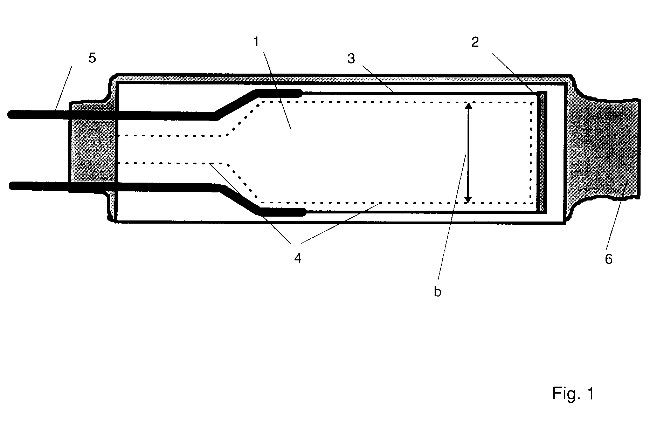

Figur 1 zeigt ein Ausführungsbeispiel für ein erfindungsgemäßes Nutenwiderstandsthermometer. Kernstück ist der einstückige Trägerkörper 1, welcher entlang den Langseiten und einer der Schmalseiten mit einer vertieften Nut 10 versehen ist, in weiche die Anschlußdrähte 3 sowie auch der mit den Anschlußdrähten versehene Meßwiderstand 2 eingelegt sind. Ferner ist zu erkennen, daß an den Schmalseiten die Tiefe der Nut nicht über die gesamte Länge gleich ist. Im vorderen Bereich sind die Bodenlinien der direkt gegenüberliegenden Nutenabschnitte mit einer Stegbreite von b voneinander entfernt. Etwa im letzten Drittel der Länge des Trägerkörpers 1 vertiefen sich die beiden gegenüberliegenden Nutenabschnitte in der in Figur 1 dargestellten Weise. Die letzten beiden Nutenabschnitte verlaufen mit ihrer Bodenlinie wieder bis zum Ende des Trägerkörpers hin parallel und mit einer Stegbreite von kleiner als b voneinander beabstandet. Die Darstellung in Figur 1 ist zum besseren Erkennen so gewählt, daß die Anschlußdrähte nicht bis zur Bodenlinie der Nut eingelegt sind.

Die gesamte Anordnung ist mit einem Schrumpfschlauch 6 umhüllt. Dieser schnürt an den Enden so stark ein, daß an einem Ende dadurch der Meßwiderstand nicht aus dem Trägerkörper herausfallen kann, und an dem anderen Ende eine einschnürende Beaufschlagung der heraustretenden Anschlußdrahtabschnitte derart erfolgt, daß dieselben tief in die Nutenabschnitte hineingedrückt werden. Dabei wird eine leichte Druckbeaufschlagung auf die über die entstehende Kante hinausragenden Anschlußdrähte auf dieselben bewirkt, was widerum durch seine Klemmung der Anschlußdrähte wie eine Zugentlastung wirkt.

Begünstigt wird dieser Effekt noch dadurch, daß die Anschlußdrähte nahezu über ihren halben Längenabschnitt der innerhalb des Trägerkörpers angeordnet ist noch eine Isolationsummantelung aufweist.

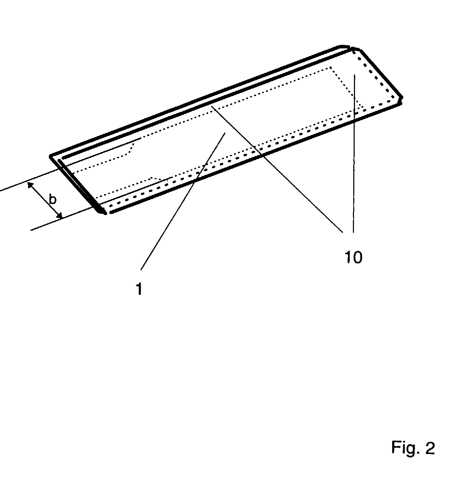

Figur 2 zeigt den Trägerkörper 1 für sich. Darin angelegt sind die Nutenabschnitte 10. In diese werden die Anschlußdrähte und der Meßwiderstand eingelegt. Wichtig ist hierbei, daß der Trägerkörper 1 einstückig ist, was nicht nur fertigungstechnische Vorteile hat, sondern auch Vorteile im Hinblick auf eine zuverlässige Funktion hat. Ebenfalls vorteilhaft ist die integrierte, ohne zusätzliche Teile auskommende Zugentlastung.

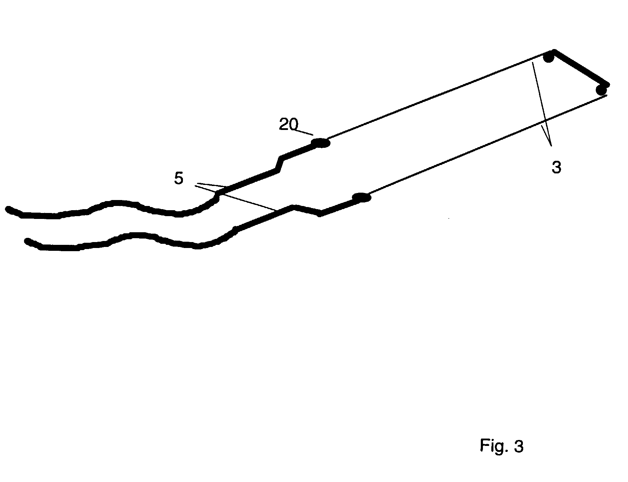

Figur 3 zeigt sozusagen die Verdrahtung des Thermometers für sich. dabei ist eine spezifische Ausgestaltung der Drähte gezeigt. Der Widerstand ist mit Anschlußdrähten 3 versehen, die in der hier dargstellten Weise geführt bzw gebogen sind. Diese Anschlußdrähte mitsamt dem Meßwiderstand werden in der in Fig 1 dargestellten Weise in den Trägerkörper eingelegt.

An den Verbindungspunkten 20 sind dann die Anschlußdrähte 3 mit den Anschlußleitungen 5 elektrisch verbunden, die mit einer Isolation ummantelt sind. Die Anschlußleitungen werden mitsamt Isolation in der in Fig.1 dargestellten Weise in den Trägerkörper eingebracht.

Der Schrumpfschlauch wird dann in der angegebenen Weise zum Schluß aufgezogen und in dem angegebenen Maß geschrumpft.

## Patentansprüche

1. Nutenwiderstandsthermometer mit einem temperaturempfindlichen elektrischen Widerstand, mit mindestens 2 elektrischen Zuleitungen, wobei der Meßwiderstand sowie Leitungsabschnitte in einer Trägerkörperanordnung eingebracht sind,
**dadurch gekennzeichnet,**
daß der Trägerkörper (1) einstückig ausgebildet und mit einer zumindest teilumfangsmäßig umlaufenden Nut (10) versehen ist, in welche sowohl der Meßwiderstand (2) als auch die Anschlußleitungen (5) und die Anschlußdrähte (3) teilformschlüssig einlegbar sind.

2. Nutenwiderstandsthermometer nach Anspruch 1,
**dadurch gekennzeichnet,**
daß in den Trägerkörper (1) ein Meßwiderstand (2) mit an gegenüberliegenden Enden austretenden Anschlußdrähten (3) eingesetzt ist.

3. Nutenwiderstandsthermometer nach Anspruch 1 oder 2,
**dadurch gekennzeichnet,**
daß die an den Längseiten des Trägerkörpers (1) verlaufenden Nutenabschnitte (10) hinsichtlich ihrer Bodenlinie um eine Stegbreite (b) voneinander beabstandet angeordnet sind, und daß die Stegbreite (b) demjenigen Isolierabstand entspricht der aufgrund der elekrtischen Beaufschlagung mindestens einzuhalten ist.

4. Nutenwiderstandsthermometer nach einem der vorherhegenden Ansprüche,
**dadurch gekennzeichnet,**
daß zumindest der Meßwiderstand (2) und diejenige Spitze des Trägerkörpers (1) in welcher der Meßwiderstand (2) eingelegt ist, mit einem temperaturbeständigen Verguß oder Kleber versiegelt sind.

5. Nutenwiderstandsthermometer nach einem der vorherhegenden Ansprüche,
**dadurch gekennzeichnet,**
daß eine Zugentlastung implementiert wird, indem die Nutenabschnitte (10) an demjenigen Trägerkörperende an welchem die Anschlußleitungen austreten über eine Teilstrecke der Trägerkörperlängsseiten hinsichtlich ihrer Bodenlinie vertieft sind und die Anschlußleitungsabschnitte (5) dort fomschlüssig eingelegt und von einem Schrumpfschlauch (6) ortsfest umgben sind.

6. Nutenwiderstandsthermometer nach einem der vorherhegenden Ansprüche,
**dadurch gekennzeichnet,**
daß der gesamte Trägerkörper (1) von einem Schrumpfschlauch, vorzugsweise aus Teflon umschrumpft ist.

7. Nutenwiderstandsthermometer nach einem der vorherhegenden Ansprüche,
**dadurch gekennzeichnet,**
daß alle Komponenten , vorzugsweise aus Teflon, Silicon oder glasfaserverstärkten Elementen für eine Dauereinsatztemperatur von mindestens 200°C ausgelegt sind.
